# EUROPEAN PATENT APPLICATION

(11) **EP 1 736 292 A1**
(43) Date of publication of application: **27.12.2006**
(21) Application number: 06012498.9
(22) Date of filing: 19.06.2006
(51) Int. Cl.: B29C 41/00, B29C 41/52

(54) **Mould carrying arm for rotational moulding machine with temperature detecting system**

(30) Priority: 20.06.2005 IT MI20051151
(71) Applicant: Polivinil Rotomachinery S.P.A., 28065 Cerano NO (IT)
(72) Inventor: Sacchi, Pierluigi, 27029 Vigevano (PV) (IT)
(74) Representative: Petruzziello, Aldo

(57) **Abstract**

In a rotational moulding machine a mould carrying arm (4; 200) comprises a primary shaft (40), a secondary driven shaft (60) mounted rotatably in a casing (70) integral with the primary shaft (40), at least one mould carrying plate (63, 63') mounted at the end of the secondary driven shaft (60), and a system able to detect the temperature inside the mould. The temperature detection system comprises at least one temperature probe (130a, 130b, 140a, 140b) disposed inside the mould, a first electrical collector (100) on the secondary driven shaft (60) and a second electrical collector (110) on the primary shaft. Electrical cables (103, 104, 105, 117) connect respectively the temperature probes (130a, 130b, 140a, 140b) to the first electrical collector (100), the first collector (100) to the second collector (110) and the second collector (110) to the electrical panel (118) of the machine.

## Description

The present invention refers to a mould carrying arm for a rotational moulding machine with a temperature detecting system.

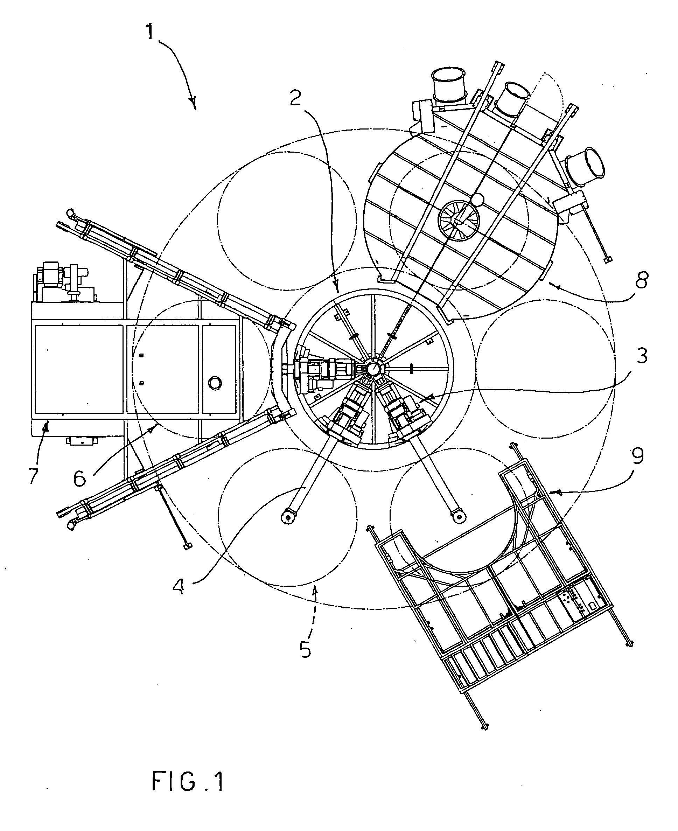

Figure 1 shows a plan view of a rotational moulding system indicated as a whole with reference numeral 1.

The system comprises:
- a central drive assembly 2 on which are mounted in turn respective straight or offset mould carrying arms 4, designed to support the moulds 5 wherein the plastic material is shaped;
- an oven 6 wherein the mould 5, containing the plastic material in powder form, is placed;
- a combustion chamber 7 connected to the oven 6 to carry the plastic material into the oven 6 at the correct moulding temperature;
- a cooling chamber 8 to cool the plastic material that forms the moulded article inside the mould 5; and
- an unloading station 9 to unload the cooled article from the mould 5.

The drive assembly 2, depending upon its configuration (carousel or shuttle 3), allows translation of the individual mould carrying arms 4 into the different work stations 6, 8, and 9, all together (carousel) or independently (shuttle).

Inside the oven 6, such a temperature is set as to allow baking or sintering of the material which passes from the solid, powder state to the semi-liquid state. Inside the oven 6, the mould carrying arms 4 cause the mould 5 to make a bi-axial rotational movement which causes sintering and optimal distribution of the plastic material on the inside wall of the mould.

The subsequent passage of the moulds 5 in the cooling chamber 8, on the other hand, causes setting of the plastic material inside the mould.
During heating, it is necessary to ensure that all the material in the mould 5 is heated uniformly, otherwise grains of powder will remain in the moulded article, resulting in an uneven surface of the end product.

During cooling, it is necessary to ensure that the material inside the mould is completely cooled; otherwise opening of the mould when the material is not yet completely cooled would lead to implosion or collapse of the moulded article.

Since it proves rather complex to provide a temperature detection system inside the mould 5 which rotates around two axes, with respect to the mould carrying arm 4, such a rotational moulding process is generally carried out in an empirical manner and left to the skill of the operator. In fact, the operator sets the time the mould stays in the oven 6 and in the cooling chamber 8 empirically, on the basis of personal experience and tests done with the plastic material to be used and with the product to be produced, without taking into account the temperature of the material inside the mould.

However, rotational moulding machines are intended for very versatile production, so it is extremely important to know the exact temperature of the material inside the mould.

In order to solve this problem, wireless temperature detectors (radio thermometers) designed to be placed inside the mould are known to the art. The radio thermometer measures the temperature data inside the mould and sends them in the form of radio waves, by means of its radio transmitter, to the PLC of the machine equipped with a radio receiver.

Such a wireless system presents some drawbacks:
- the radio thermometers prove to be excessively bulky and do not fit into small moulds;
- each mould must have its own radio thermometer inserted with the resulting cost and management problems;
- radio thermometers require constant maintenance, since the radio transmitter is contaminated with the plastic powder that is placed in the mould; and
- radio thermometers detect only the temperature of the air inside the mould and not the temperature of the material.

Other types of temperature detection systems are known to the art which have a flange disposed on the mould carrying plate of the arm. One or two temperature probes branch out from said flange, pass through the mould and are positioned in the inside wall of the mould. These temperature probes detect the temperature of the plastic material which is being shaped in contact with the inside wall of the mould. In the flange are formed conductive tracks for transmission of the signal, which communicate with a radio transmitter which sends the signal, by means of radio waves, to a radio receiver connected to the PLC of the machine.

This system too presents some drawbacks due to the weight, cost and physical size of the flanges.

In fact in a rotational moulding machine the arms are designed to allow a maximum capacity and a maximum physical size of the moulds. It must be considered that a straight arm generally has two mould carrying plates and the physical size of the arm is defined by a sphere around the centre of revolution and rotation of the mould carrying plates.

At least one flange with a considerable thickness and a high weight (about 25 kg) is necessary. These flanges contribute to increase the weight and centre distance between the two moulds. As a result, moulds must be provided with a smaller capacity and a smaller size compared with the maximum capacity and weight defined at the design stage. Thus, the machine cannot be used with large-sized moulds.

Furthermore, to allow assembly of the flanges, the mould-carrying plates must be modified and modifications must be made to the arm to allow electrical leads to pass from one side of the arm to the other to serve both flanges.

The flanges are subject to high thermal shocks and to contact with water, with a consequent rapid deterioration of the signal transmission tracks, and thus require frequent maintenance.

The flanges, being disposed on the rotating arm, must be provided with a radio transmitter and cannot be supplied by electrical leads; therefore said radio-transmitter needs a battery power supply. This leads to complications and machine stoppages to replace the battery, which in any case has a limited life.

Furthermore, in radio transmission there are often problems of loss of signal and interference with other radio frequency signals.

Object of the present invention is to overcome the drawbacks of the prior art by providing a mould carrying arm for a rotational moulding machine which has a temperature detection system able to detect the temperature of the material inside the mould in a reliable, efficient and effective manner.

Another object of the present invention is to provide such a mould-carrying arm for a rotational moulding machine with a temperature detection system that is versatile, occupies little space, and is able not to modify the design parameters of the machine.

Another object of the present invention is to provide such a mould-carrying arm for a rotational moulding machine with a temperature detection system that is cheap and simple to produce.

These objects are achieved according to the invention with the characteristics listed in appended independent claim 1.

Advantageous embodiments of the invention are apparent from the dependent claims.

The mould-carrying arm of the rotational moulding machine according to the invention comprises:
- a primary shaft mounted rotatably on supports integral with a carriage of the carousel of the rotational moulding machine,
- a secondary driven shaft mounted rotatably in a casing integral with the primary shaft with an axis of rotation at right angles to the axis of rotation of the primary shaft,
- at least one mould-carrying plate mounted at the end of the secondary driven shaft outside of said casing to support a mould, and
- a temperature detection system able to detect the temperature inside said at least one mould.

The temperature detection system comprises:
- at least one temperature probe disposed inside said at least one mould,
- a first electrical collector comprising an inner ring integral with said secondary driven shaft, in sliding electrical contact with an outer ring integral with said casing integral with the primary shaft;
- at least one input electrical lead connected to said at least one temperature probe and to said inner ring of the first electrical collector;
- a second electrical collector comprising an inner ring integral with said primary shaft, in sliding electrical contact with an outer element integral with the carriage of the carousel,
- a connecting electrical lead which electrically connects said outer ring of the first collector to said inner ring of the second collector, and
- an electrical output lead which electrically connects the outer element of the second collector to the electrical panel of the machine, integral with the carriage structure, to send the temperature data detected by said at least one probe.

The advantages of the invention are clear in that it allows the temperature signal detected by the probes to be transmitted to the electrical panel of the machine, via cables, without requiring wireless connections.

Further characteristics of the invention will be made clearer by the detailed description that follows, referring to a purely exemplifying and therefore non limiting embodiment thereof, illustrated in the appended drawings, in which:
Figure 1 is a diagrammatic top plan view showing a rotational moulding machine;
Figure 2 is a plan view showing a mould-carrying arm according to the invention, partially broken off;
Figure 3 is an axial sectional view taken along the plane of section III-III of Figure 2;
Figure 3A is an enlarged view of a detail of Figure 3, showing the secondary driven shaft;
Figure 4 is an axial sectional view taken along the plane of section IV-IV of Figure 2;
Figure 5 is an end view of the arm of Figure 2;
Figure 6 is a perspective view showing the casing of the secondary driven shaft;
Figure 7 is a top plan view of the first electrical collector of the secondary driven shaft;
Figure 8 is a side view of the first electrical collector of Figure 7;
Figure 9 is a top plan view of the second electrical collector of the primary shaft;

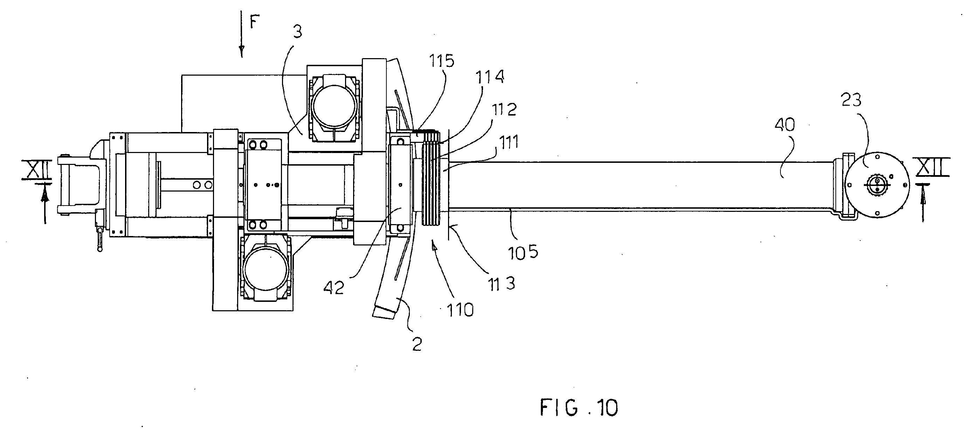

Figure 10 is a plan view of the arm of Fig. 1 cabled and mounted on a carriage of the carousel of the machine;
Figure 11 is a side view, partially broken away, taken in the direction of the arrow F of Figure 10;
Figure 12 is an axial sectional view taken along the plane of section XII-XII of Figure 10;
Figure 12A is an enlargement of a detail of Figure 12;
Figure 13 is a cross sectional view taken along the plane of section XIII-XIII of Figure 12A; and
Figure 14 is a side view of a mould-carrying arm of the offset type.

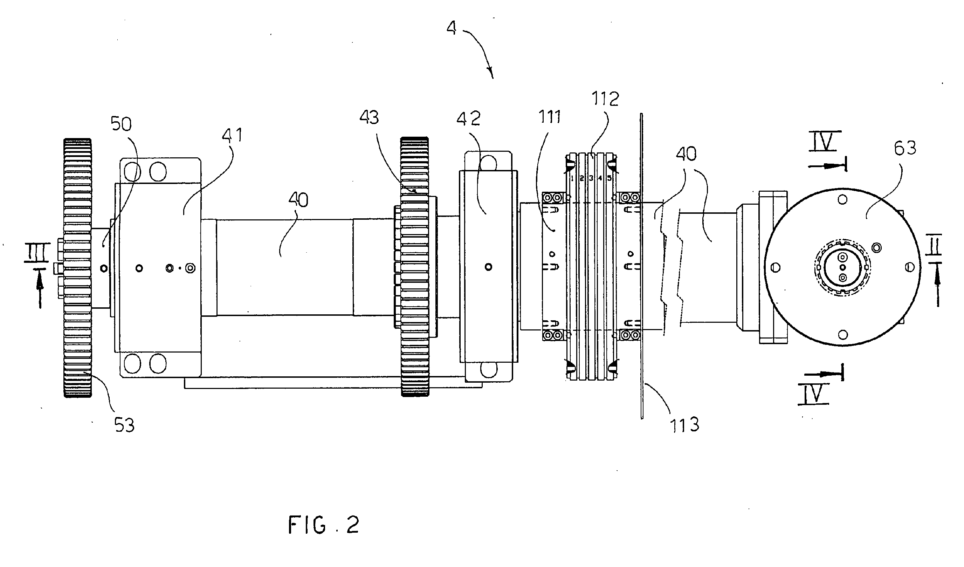

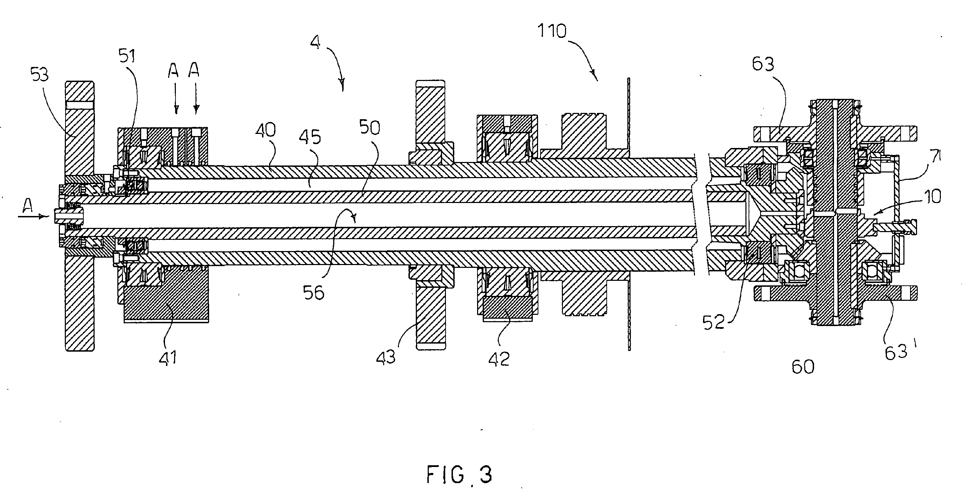

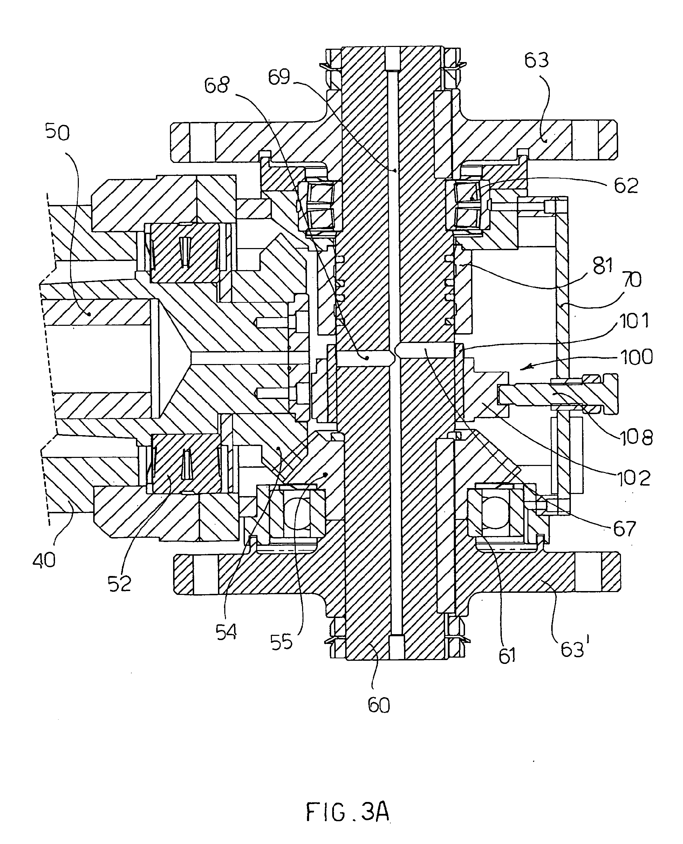

With reference for now to Figures 2 and 3, a mould carrying arm denoted as a whole with reference numeral 4 is shown. The arm 4 comprises a primary shaft 40 which is mounted rotatably in two bearing supports 41 and 42 integral with the carriage 3 of the carousel 2, as shown in Figure 1. A sprocket wheel 43 is shrunk on the primary shaft 40 and is set in rotation by a motor unit (not shown), so as to set in rotation the primary shaft 40 around its own axis.

As shown in Figure 3, the primary shaft 40 is entirely hollow. A secondary shaft 50 supported rotatably by bearings 51 and 52 is mounted coaxially inside the primary shaft 40. The rear end of the secondary shaft 50 protrudes outward from the primary shaft 40 and a sprocket wheel 53 is shrunk thereon and is set in rotation by a motor unit (not shown), so as to cause the secondary shaft 50 to rotate around its own axis which coincides with that of the primary shaft 40.

As shown better in Figure 3A, at the fore end of the secondary shaft 50 there is shrunk a bevel pinion 54 which meshes with a matching bevel pinion 55 shrunk on a secondary driven shaft 60 disposed along an axis at right angles to the primary shaft 40.

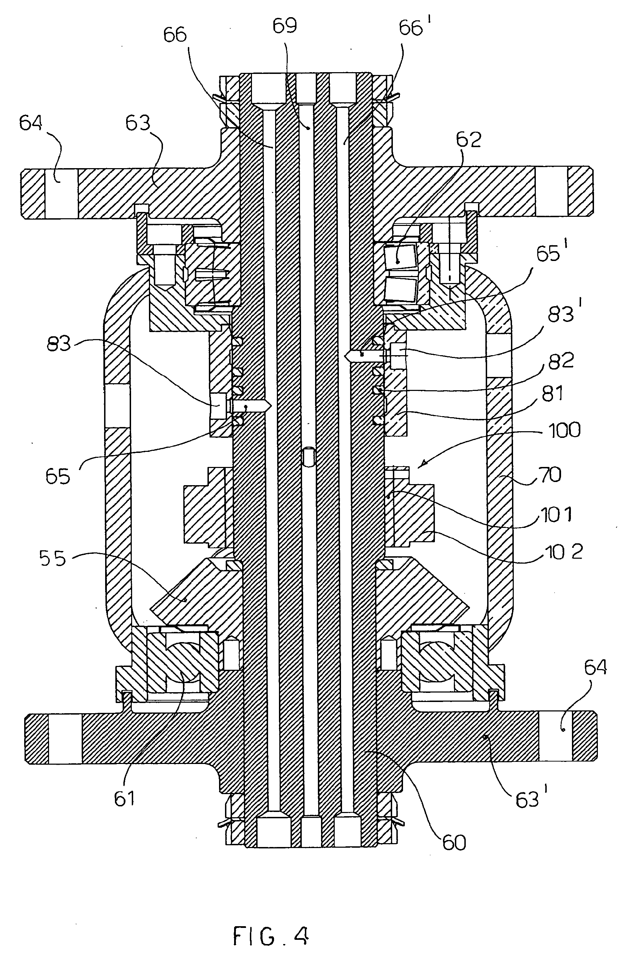

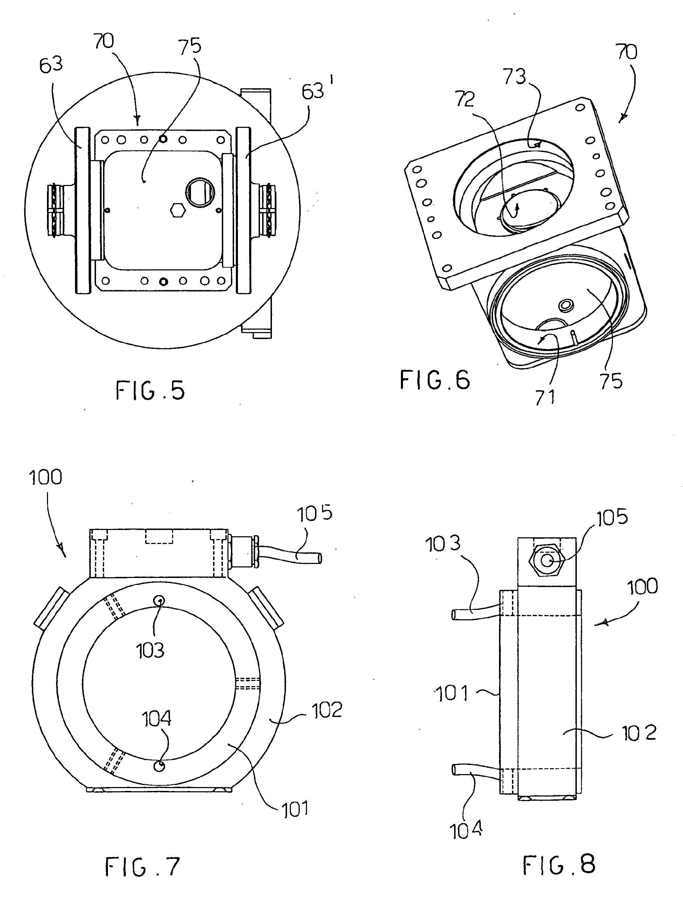

As shown also in Figure 4, the secondary driven shaft 60 is supported rotatably by bearing assemblies 61 and 62 disposed inside a casing 70 mounted integrally to the primary shaft 40. As shown in Figure 6, the casing 70 is substantially cube shaped and has two opposed holes 71 and 72 to receive the bearing assemblies 61 and 62 and a third hole 73 for passage of the bevel pinion 54 of the end of the secondary shaft 50. As shown in Figure 5, the front wall 75 of the casing 70 opposite the hole 73 is closed, so as to keep the elements contained in the casing 70 protected.

Rotation of the first bevel gear 54 integral with the secondary shaft 50 imparts the rotation to the second bevel pinion 55 integral with the secondary driven shaft 60 allowing rotation of the secondary driven shaft 60 around its axis at right angles to that of the primary shaft 40.

The two ends of the secondary driven shaft 60 protrude from the casing 70 and shrunk thereon are respective mould carrying plates 63, 63' provided with peripheral holes to allow anchoring of the mould (not shown).

When the primary shaft 40 is driven in rotation, the casing 70 which supports the secondary driven shaft 60 is also caused to rotate, thus the moulds make a movement of revolution around the axis of the primary shaft 40. When the secondary shaft 50 is driven in rotation through coupling of the bevel pinions 54, 55 the secondary driven shaft 60 is made to rotate and the moulds supported by the plates 63, 63' make a movement of rotation around the axis of the secondary driven shaft 60.

With reference to Figure 3, the secondary shaft 50 is hollow on the inside and has an axial channel 56 for passage of the air that enters from the rear end thereof (arrow A). Furthermore, between the secondary shaft 50 and the primary shaft 40, a cylindrical space 45 is formed for passage of the air that enters the radial ducts of the support 41 (arrow A).

The air from the axial channel 56 of the secondary shaft and from the cylindrical space 45 of the primary shaft reaches the inside of the casing 70. As shown in Figure 4, an air distribution bush or sleeve 81 mounted integrally with the casing 70 is provided inside the casing 70. The air distribution bush 81 is mounted rotatably and with a tight seal, around the secondary driven shaft 60. The seal is provided by a plurality of O-rings 82 disposed in annular grooves around the secondary driven shaft 60.

In the air distribution bush 81 there are formed two radial holes 83, 83' disposed in register with the respective radial ducts 65, 65' formed in the secondary driven shaft 60. The radial ducts 65, 65' are in communication with respective longitudinal ducts 66, 66' which extend for the whole length of the secondary driven shaft 60 so as to carry air into the moulds supported by the respective plates 63, 63'.

As shown in Figures 3 and 3A, inside the casing 70, between the bevel pinion 55 and the air distribution bush 81, is disposed a rotating electrical collector 100. As shown in Figures 7 and 8, the electrical collector 100 comprises an inner slip ring 101 and an outer slip ring 102 mounted rotatably around the inner slip ring 101. Sliding electrical contacts are provided between the outer surface of the inner slip ring 101 and the inner surface of the outer slip ring 102 to put the two slip rings 101 and 102 in electrical communication.

The inner slip ring 101 is fixed integrally to the secondary driven shaft 60. The outer slip ring 102, on the other hand, is fixed integrally to the casing 70 by means of a stop 108 (Figure 3A). A shown in Figure 8, two electrical input leads 103 and 104 are connected to the inner slip ring 101, whilst as shown in Figure 7, an electrical output lead 105 is connected to the outer slip ring 102.

With reference to Figure 3A, an axial duct 69 which passes through the entire shaft 60 is formed in the secondary driven shaft 60. The axial duct 69 communicates with two radial ducts 67, 68 disposed centrally in diametrically opposite positions slightly offset from one another. The radial ducts 67 and 68 are disposed to coincide with the inner slip ring 101 of the collector 100.

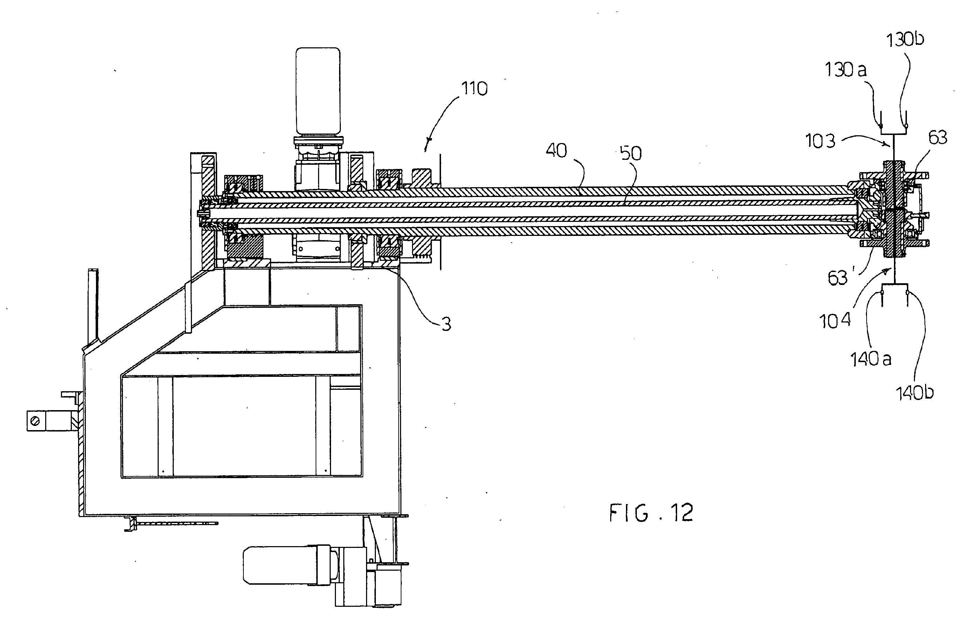

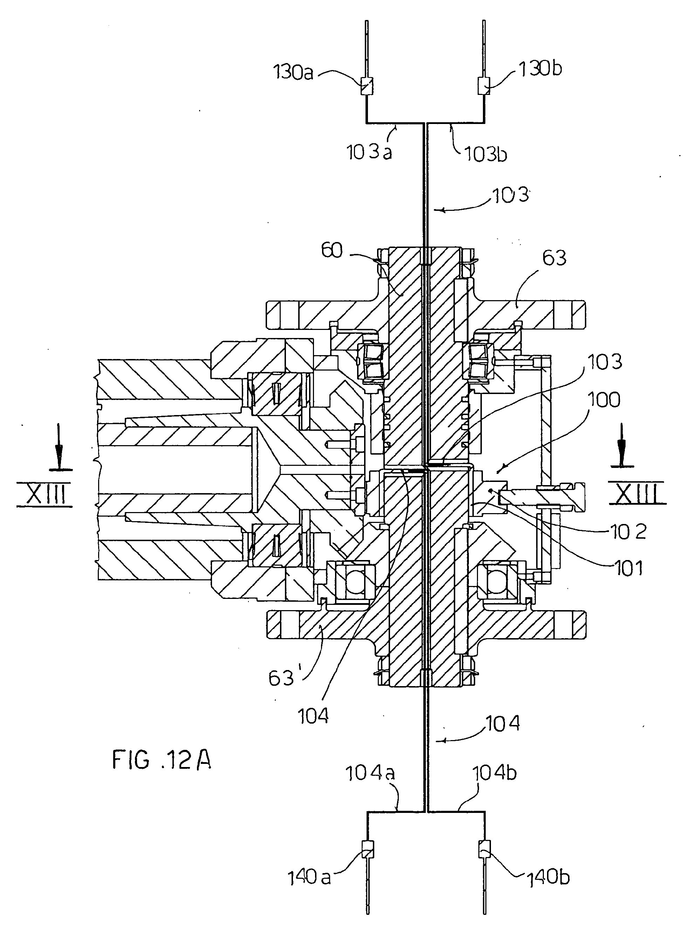

As shown in Figure 12A, the first electrical input lead 103 of the inner slip ring 101 of the electrical collector 100 is inserted into the first radial duct 67 of the secondary driven shaft 60 and through the axial duct 69 is brought out of the shaft 60 onto the first mould carrying plate 63. The second electrical input lead 104 of the inner slip ring of the electrical collector 100, on the other hand, is inserted into the second radial duct 68 of the secondary driven shaft 60 and through the axial duct 69 is brought out of the shaft 60 onto the second mould carrying plate 63'.

The electrical input leads 103 e 104 are multiple leads and each of them has two respective electrical leads 103a and 103b, 104a and 104b which are connected to respective temperature probes 130a and 130b, 140a and 140b destined to be disposed inside the moulds mounted on the mould carrying plates 63, 63'. In this manner two temperature probes are positioned inside each mould, one disposed on the wall of the mould to detect the temperature of the material inside the mould and the other disposed in the centre of the mould to detect the temperature of the air inside the mould.

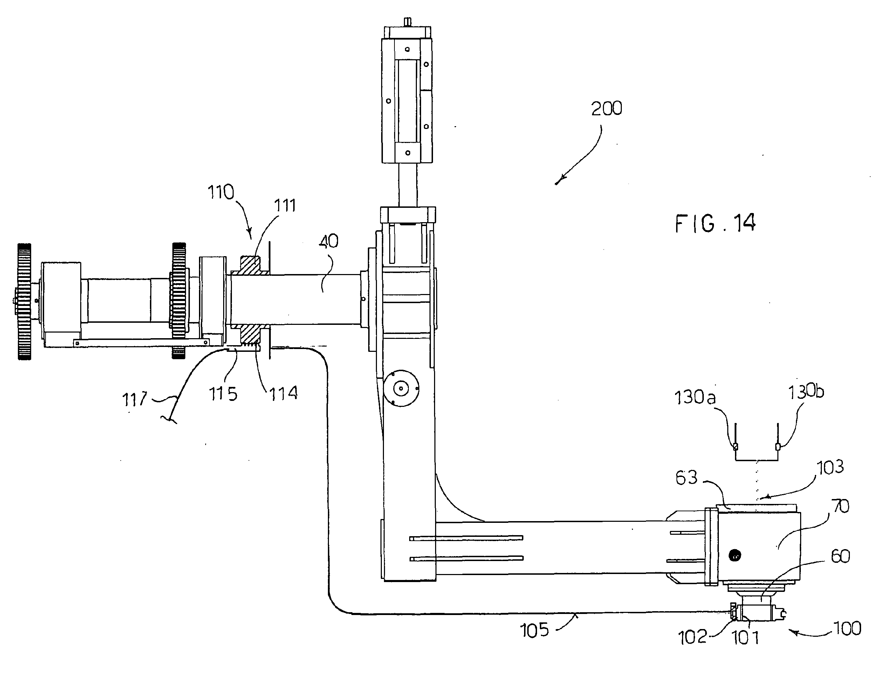

As shown in Figure 13, the electrical output lead 105, is made to leave the casing 70 and brought on the primary shaft 40 towards a second electrical collector 110 (Figures 2, 3) disposed on the primary shaft 40, near the support 42 integral with the structure of the carriage 3.

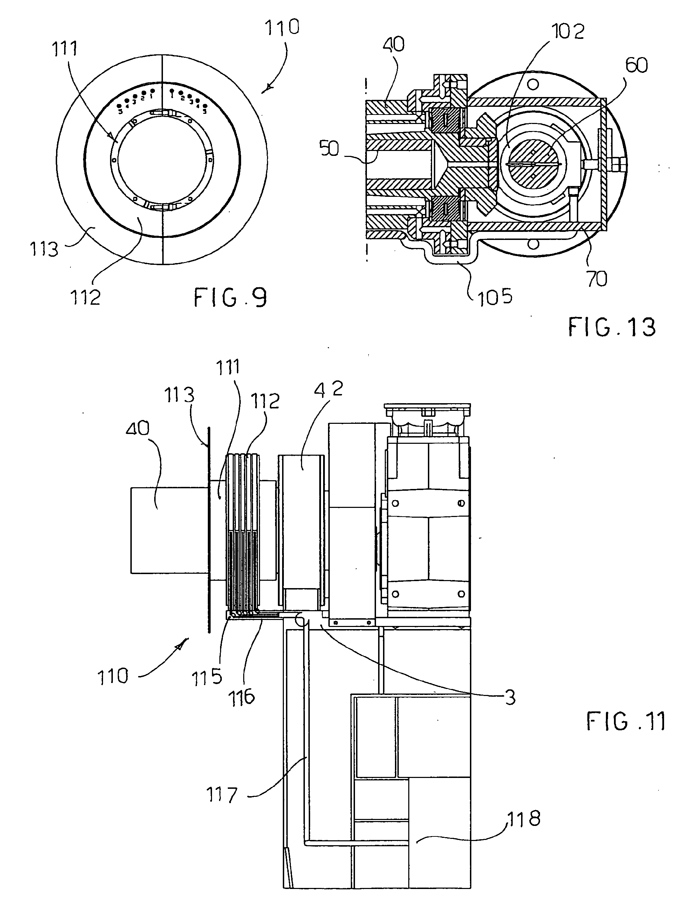

As shown also in Figure 9, the second electrical collector 110 comprises an inner slip ring 111 which is fixed integrally to the primary shaft 40. The inner slip ring 111 comprises five annular tracks 112 for sliding electrical contact and a protective flange 113 facing towards the mould-carrying plates 63, 63' to give rise to a heat shield.

Clearly the flange 113 can have a hole for passage of the electrical output lead 105 which is connected to the inner slip ring 111 of the second collector 110. The electrical output lead 105 is a multiple lead and comprises five electrical leads which are connected to the five annular sliding contact tracks 112.

The second collector 110 comprises an external element 115 which has five conducting brushes 114 which slide on the tracks 112 of the inner slip ring 111. As shown in Figure 11, the external element 115 of the second collector is fixed to a bracket 116 integral with the carriage structure 2. An output lead 117 which is connected to the electrical panel 118 of the machine disposed on the carriage structure 3 is connected to the external element 115 of the second collector.

In this manner the temperature probes 130a, 130b, 140a, 140b detect the temperature inside the moulds and, through the input leads 103 and 104, send signals indicative of the temperature detected at the inner slip ring 101 of the first collector 100. These signals are transmitted, by means of sliding contact, from the inner slip ring 101 to the outer slip ring 102 of the first collector. The signals from the outer slip ring 102 are transmitted through the output lead 105 to the inner slip ring 111 of the second collector 110. Then these signals are transmitted, though sliding contact, from the inner slip ring 111 to the external element 115 of the second collector 110. Finally the signals are sent by means of the output lead 117 from the outer element 115 of the second collector 110 to the electrical panel 118 of the machine which has a PLC to control the machine cycle according to the temperature detected.

Although explicit reference has been made in the present description to a straight arm 2 which carries two mould carrying plates 63, 63', it is clear that the temperature detection system according to the invention can equally well be applied to an offset or L-shaped arm which carries only one mould-carrying plate.

Figure 14 shows an offset arm 200 with only one mould-carrying plate 63, wherein like or corresponding elements to those already described are indicated with the same reference numerals and are not described in detail.

In this case, only one pair of temperature probes 130a and 130b is provided, connected by means of an input lead 103, passing through the secondary shaft 60 to the first collector 100 which is disposed at the end of the secondary driven shaft 60, outside the casing 70. The first collector 100 has an inner slip ring 101 fixed to the secondary driven shaft 60 and an outer slip ring 102 fixed to the casing 70 of the of the secondary driven shaft, The second collector 110 has an inner slip ring fixed to the primary shaft 40 and an external element 115 fixed to the carriage structure. A connecting lead 105 connects the outer slip ring 102 of the first collector to the inner slip ring 111 of the second collector.

Although two temperature probes have been described in the present embodiments, it is clear that the system can also be used with one temperature probe or with more than two temperature probes.

Numerous variations and modifications of detail within the reach of a person skilled in the art can be made to the present embodiments of the invention without thereby departing from the scope of the invention as set forth in the appended claims.

## Claims

1. A mould carrying arm (4; 200) for a rotational moulding machine, comprising:
- a primary shaft (40) mounted rotatably on supports (42, 41) integral with the structure of a carriage (3) of the carousel of the rotational moulding machine,
- a secondary driven shaft (60) mounted rotatably in a casing (70) integral with said primary shaft (40) with an axis of rotation at right angles to the axis of rotation of the primary shaft (40),
- at least one mould-carrying plate (63, 63') mounted at the end of said secondary driven shaft (60) outside said casing (70) to support at least one mould,
- a temperature detection system able to detect the temperature inside said at least one mould,
**characterized in that** said temperature detection system comprises:
- at least one temperature probe (130a, 130b, 140a, 140b) disposed inside said at least one mould,
- a first electrical collector (100) comprising an inner ring (101) integral with said secondary driven shaft (60) in sliding electrical contact with an outer slip ring (102) integral with said casing (70) integral with the primary shaft (40);
- at least one electrical input cable (103, 104) connected to said at least one temperature probe and to said inner slip ring (101) of the first electrical collector;
- a second electrical collector (110) comprising an inner slip ring (111) integral with said primary shaft (40) in sliding electrical contact with an external element (115) integral with said carriage structure (3),
- an electrical connection cable (105) which electrically connects said outer ring (102) of the first collector to said inner slip ring (111) of the second collector, and
- an electrical output cable (117) which electrically connects the external element (115) of the second collector to the electrical panel (118) of the machine to send the temperature data detected by said at least one probe.

2. A mould carrying arm (4; 200) according to claim 1, **characterized in that** an electrical input cable (103, 104) is passed through ducts (69, 67, 68) formed in said secondary driven shaft (60).

3. A mould carrying arm (4) according to claim 1 or 2, **characterized in that** it is a straight shaft which has two mould carrying plates (63, 63') and four temperature probes (130a, 130b, 140a, 140b), two for each mould, connected to respective electrical input cables (103, 104).

4. A mould carrying arm (4) according to claim 3, **characterized in that** said secondary driven shaft (60) comprises an axial duct (69) and two radial ducts (67, 68) disposed in diametrically opposite positions and slightly offset from each other to allow passage of said electrical input cables (103, 104) of the temperature probes.

5. A mould carrying arm (4) according to any one of the preceding claims, **characterized in that** said inner ring (101) of the first electrical collector is disposed inside said casing (70) of the secondary driven shaft, between a bevel pinion (55) integral with the secondary driven shaft (60) and an air distribution bush (71) disposed around the secondary driven shaft.

6. A mould carrying arm (4) according to any one of the preceding claims, **characterized in that** air input means are provided to introduce air into said casing (70) of the secondary shaft so as cool said first electrical collector (100).

7. A mould carrying arm (4) according to claim 6, **characterized in that** said air input means comprise a channel (56) formed axially inside a secondary shaft (50) disposed coaxially inside the primary shaft (40) and a cylindrical space (45) formed between said primary shaft and said secondary shaft, wherein said axial channel (56) and said cylindrical space (45) communicate with the inside of said chamber (70) of the secondary driven shaft (60).
